(19) **Europäisches Patentamt / European Patent Office / Office européen des brevets**

(11) **EP 4 765 627 A1**

(12) **EUROPEAN PATENT APPLICATION**

(43) Date of publication:
24.06.2026 Bulletin 2026/26

(51) International Patent Classification (IPC):
*H02S 50/00* (2014.01)

(21) Application number: 24307285.7

(52) Cooperative Patent Classification (CPC):
H02S 50/00

(22) Date of filing: 23.12.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: TotalEnergies OneTech
92400 Courbevoie (FR)

(72) Inventors:
• HRELJA, Nikola
92078 PARIS LA DEFENSE CEDEX (FR)
• OCHOA, Lluvia
92078 PARIS LA DEFENSE CEDEX (FR)
• ZUBAIR, Ahmad
92078 PARIS LA DEFENSE CEDEX (FR)

(74) Representative: Lavoix
2, place d'Estienne d'Orves
75441 Paris Cedex 09 (FR)

(54) **METHOD OF OPERATING A PHOTOVOLTAIC SYSTEM, AND ASSOCIATED ELECTRONIC DEVICE, ASSEMBLY AND COMPUTER PROGRAM PRODUCT**

(57) The invention relates to a method of operating a photovoltaic system (10, 12, 14), comprising the following steps:
- measuring a reference power signal of a reference photovoltaic system covered in snow,
- dividing the measured reference power signal in time brackets,
- for each time bracket, generating sample brackets, by constructing a chain sequence using Monte Carlo Markov Chain, wherein the constructed chain sequence follows at least one constraint of said time bracket if any,
- defining a confidence interval from the generated sample signals generated from the sample brackets,
- measuring a power signal of the operated photovoltaic system (10, 12, 14),
- comparing the power signal to the confidence interval,
- determining whether the photovoltaic system (10, 12, 14) was covered with snow.

FIG.1

EP 4 765 627 A1

**Description**

The present invention concerns a method of operating a photovoltaic system comprising at least one sensor adapted to measure a power signal of the photovoltaic system, and associated electronic device, assembly and computer program product.

Inverter downtime is one of the major sources of photovoltaic system production losses. Operation and maintenance actions are usually taken in a timely manner in case of inverter downtime.

Currently, the inverter downtime is identified according to a threshold using only the photovoltaic metered data.

One of the challenges in utility-scale photovoltaic systems is distinguishing between inverter downtime and other events, such as communication outages, which may not always be related to actual production losses and/or that may require other operation and maintenance actions than for inverter downtime.

As photovoltaic systems are increasingly installed in regions closer to the poles, a new type of events, corresponding to snow-related power losses, becomes more common. Quantifying said power losses and distinguishing them from other events, such as inverter downtime or communication losses, is thus crucial.

However, the current method does not allow such distinction.

In particular, for the snow detection, additional measurements, such as weather or satellite data, are needed. However, said data are not always available and/or reliable when needed.

The aim of the invention is thus to propose a method of operating a photovoltaic system, adapted to detect snow coverage, during a given period, without additional weather and/or satellite data for said period.

To this end, the invention relates to a method of operating a photovoltaic system comprising at least one sensor adapted to measure a power signal of the photovoltaic system, the method comprising the following steps:

- measuring at least one reference power signal of at least one reference photovoltaic system, the or each reference photovoltaic system comprising at least one reference sensor for measuring the power signal of said reference photovoltaic system, each measured reference power signal being acquired for a respective duration, the reference photovoltaic system being covered in snow during the duration,
- dividing the or each of the at least one measured reference power signal in consecutive time brackets,
- defining at least one constraint for at least one time bracket,
- for each time bracket, generating sample brackets from the corresponding time bracket of the corresponding measured reference power signal, by constructing a chain sequence using Monte Carlo Markov Chain, wherein the constructed chain sequence follows the at least one constraint of said time bracket if any, each sample bracket corresponding to one chain sequence,
- generating sample signals by concatenating sample brackets, such that, for each sample signal, for each time bracket, one sample bracket is selected to be concatenated, the sample brackets being concatenated in the time order of the corresponding time bracket in the measured reference power signal,
- defining a confidence interval from the generated sample signals,
- measuring a power signal of the operated photovoltaic system, the measured power signal being acquired for a duration of interest,
- comparing the measured power signal to the confidence interval,
- determining that the photovoltaic system was covered with snow during the duration of interest if the measured power signal is within the confidence interval, and that the photovoltaic system was not covered with snow during the duration of interest if the measured power signal is outside the confidence interval.

This method allows determining whether the photovoltaic system was covered with snow during the duration of interest, using the power signal of the photovoltaic system and reference power signal(s). No additional weather or satellite data for the duration of interest is needed.

According to other advantageous aspects of the invention, the method comprises one or more of the following features, taken alone or in any technically possible combinations:

- during the generating of the sample signals, the sample brackets of each sample signal are concatenated such that each sample bracket to be concatenated but the last finishes where the next consecutive sample bracket starts;
- the method comprises sending a snow alert signal if it is determined that the photovoltaic system was covered with snow during the duration of interest;
- the method comprises detecting a time interval where the power signal is inferior to a threshold, the time interval being during the duration of interest, the method comprising sending an inverter downtime alert signal if it is determined that the photovoltaic system was not covered with snow during the duration of interest;
- the duration of interest and the duration(s) of the measured reference power signal comprises, more particularly is constituted of, a day;

- the or each of the at least one measured reference power signal comprises a first time bracket and a last time bracket, the first time bracket being the first of the time brackets in time and the last time bracket being the last of the time brackets in time,

  each sample bracket for the first time bracket starts at a first position at a minimum start power value, and each sample bracket for the last time bracket ends at a last position at a minimum end power value, the at least one constraint comprising that, for each sample bracket for the first time bracket, said sample bracket only has values superior to the minimum start power value outside the first position, and/or that, for each sample bracket for the last time bracket, said sample bracket only has values superior to the minimum end power value outside the last position;

- the or each of the at least one measured reference power signal is divided into at least four brackets, constraints being defined only for the first and the last time bracket;
- the method comprises discretizing the at least one measured reference power signal before the generating of the sample brackets, the chain sequence using Monte Carlo Markov Chain being built for each sample bracket using a transition matrix, the transition matrix being derived from the reference power signal of the corresponding time bracket;
- the defining of the confidence interval comprises calculating the mean signal and the standard deviation of all the generated sample signals, and defining the confidence interval from the calculated mean signal and standard deviation;
- the confidence interval is the interval comprised between the calculated mean signal minus two times the calculated standard deviation and the calculated mean signal plus two times the calculated standard deviation; and/or
- the at least one reference photovoltaic system is the operated photovoltaic system.

The invention further relates to an electronic device adapted to receive at least one reference power signal of at least one reference photovoltaic system, the or each reference photovoltaic system comprising at least one reference sensor for measuring the power signal of said reference photovoltaic system, the measured reference power signal being acquired for a duration, the reference photovoltaic system being covered in snow during the duration, the electronic device being adapted to implement the steps of dividing in consecutive time brackets, defining the at least one constraint, the generating of the sample brackets, generating the sample signals, and defining the confidence interval of the method as defined previously.

The invention further relates to an assembly comprising a photovoltaic system, an electronic device as defined previously, and one calculator, the photovoltaic system comprising at least one sensor adapted to measure a power signal of the photovoltaic system, the calculator being adapted to compare the measured power signal to a confidence interval defined by the electronic device and to determine that the photovoltaic system was covered with snow during the duration of interest if the measured power signal is within the confidence interval, and that the photovoltaic system was not covered with snow during the duration of interest if the measured power signal is outside the confidence interval.

The invention further relates to a computer program product directly loadable into the internal memory of a digital computer or stored on a computer usable medium, the computer program product comprising instructions that, when executed, implement the steps of dividing in consecutive time brackets, defining the at least one constraint, the generating of the sample brackets, generating the sample signals, and defining the confidence interval of the method defined previously.

The invention will become clearer from the following description, given solely by way of non-limiting example, and made with reference to the drawings in which:

- Figure 1 is a schematic representation of a photovoltaic plant,
- Figure 2 is a block diagram of a method according to an embodiment of the invention,
- Figure 3 is a schematic representation of a reference power signal, and corresponding time brackets, sample brackets and sample signals, according to one embodiment of the invention, and
- Figure 4 is a schematic representation of an electronic device according to an embodiment of the invention.

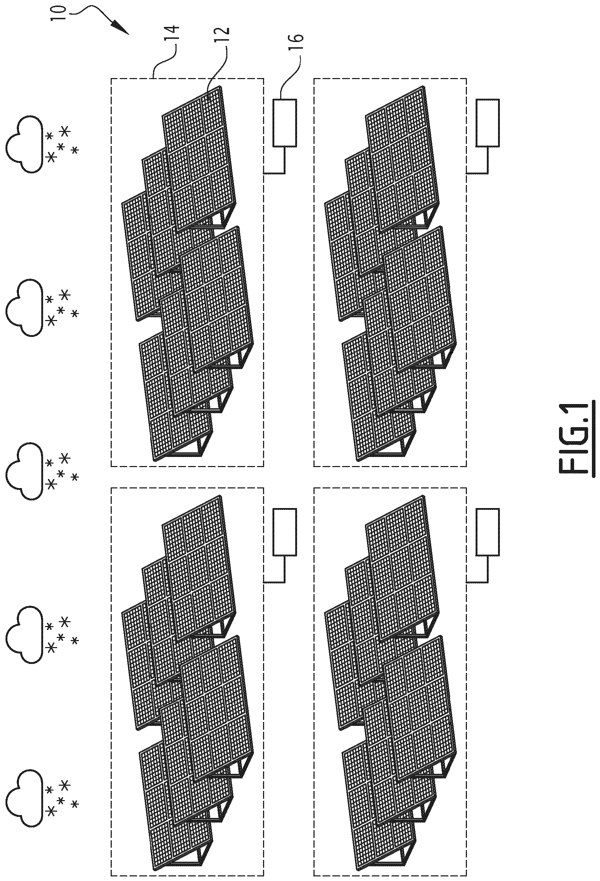

An example of a photovoltaic plant 10 with photovoltaic panels 12 is represented on figure 1.

The plant 10 is here divided in zones 14.

The zones 14 are, for example, defined according to criteria based on the operation of the plant 10, such as capacity and/or the hierarchy of transformers and connection ports of the plant.

The plant 10 and/or each zone 14 and/or each panel 12 may be considered as a photovoltaic system, according to the invention and regarding the rest of the description.

The photovoltaic system, here for illustrative purposes only each zone 14, comprises at least one sensor 16

adapted to measure a power signal of the photovoltaic system, as a function of time.

The power signal relates to the power produced by the photovoltaic system, as a function of time.

For example, the power signal is the power produced by the photovoltaic system, as a function of time.

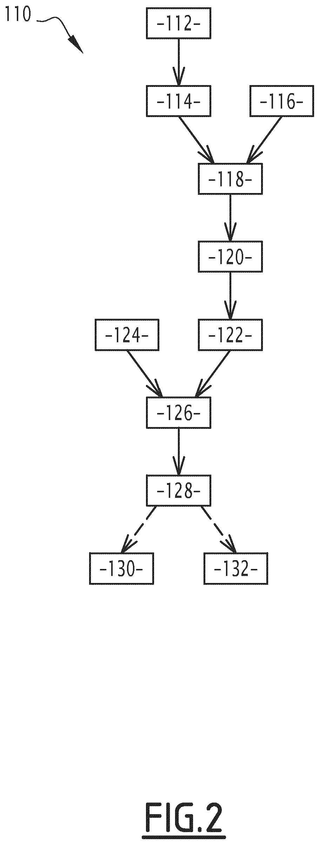

A method for operating a photovoltaic system according to the invention will now be described in regard to figure 2.

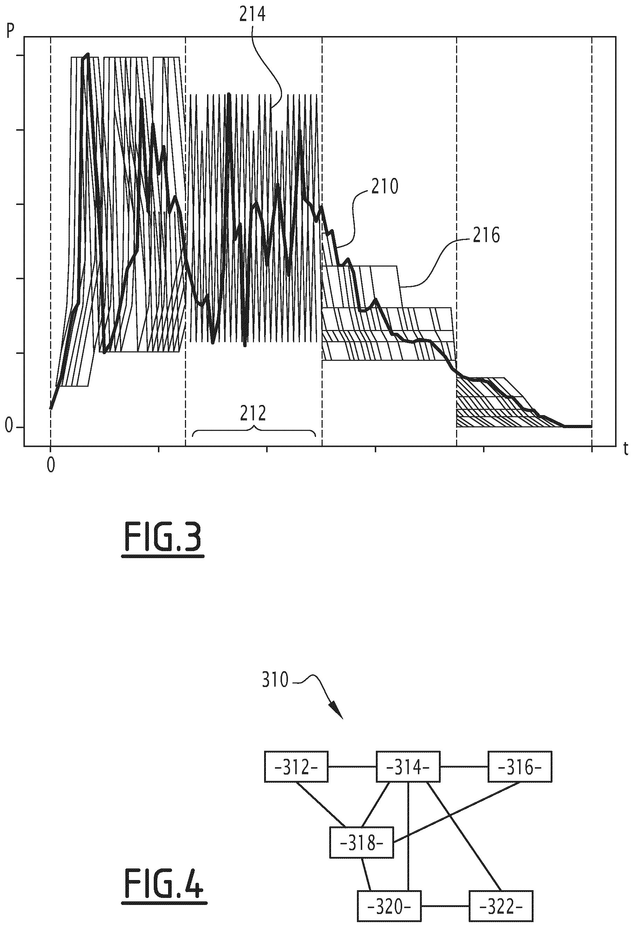

A corresponding electronic device 310 is, for example, represented on figure 4.

The method 110 comprises the following steps:

- measuring 112 at least one reference power signal of at least one reference photovoltaic system,
- dividing 114 the or each of the at least one measured reference power signal in consecutive time brackets,
- defining at least one constraint 116 for at least one time bracket,
- for each time bracket, generating sample brackets 118 from the corresponding bracket of the corresponding measured reference power signal,
- generating sample signals 120 by concatenating sample brackets from the generated sample brackets,
- defining a confidence interval 122 from the generated sample signals,
- measuring a power signal 124 of the photovoltaic system, the measured power signal being acquired for a duration of interest,
- comparing 126 the measured power signal to the confidence interval, and
- determining 128 that the photovoltaic system was covered with snow during the duration of interest if the measured power signal is within the confidence interval, and that the photovoltaic system was not covered with snow during the duration of interest if the measured power signal is outside the confidence interval.

The or each reference photovoltaic system of the measuring step 112 comprises at least one reference sensor for measuring the power signal of said reference photovoltaic system.

Each measured reference power signal is acquired for a respective duration, the reference photovoltaic system being covered in snow during the duration.

It is, for example, determined that the reference photovoltaic system is covered in snow during the duration using weather or satellite data and/or observational data, such as to confirm the snow coverage.

Said data are, for example, verified for said duration.

The or each measured reference power signal for said duration is memorized.

An example of a measured reference power signal 210 is, for example, represented in figure 3, in bold, with P the power, and t the time.

For example, the at least one reference photovoltaic system comprises, more particularly is, the operated photovoltaic system.

The reference power signal comprises, for example, past data of the photovoltaic system to be operated, during a period or periods for which it is known that the photovoltaic system was covered in snow.

Additionally or alternatively, the at least one reference photovoltaic system comprises other photovoltaic system(s) than the operated photovoltaic system.

The reference power signal comprises, for example, past data of said photovoltaic system(s).

The duration(s) of the measured reference power signal(s) comprises, more particularly is constituted of, a day.

A day is defined as the period from one sunrise to the next sunset.

The sunrise and the sunset are, for example, determined, here by a deterministic algorithm, based on the longitude and the latitude of the corresponding photovoltaic system, and the position of the sun given a certain time of the year.

Alternatively, the duration(s), for example, comprise multiple days. The method described below is, for example, adapted by considering that each reference power signal with multiple days is divided in multiple reference power signals for each day of the multiple days.

The or each of the at least one measured reference power signal 210, measured during the respective duration, is divided in consecutive time brackets, for example in a given number of consecutive time brackets.

Said given number is equal or superior to four, here into four, such that the or each of the at least one measured reference power signal is divided into at least four brackets.

More particularly, the respective duration is divided in consecutive time intervals 212, for example in said given number of time intervals, each time interval corresponding to the duration of one of the time brackets.

The time intervals corresponding to one measured reference power signal are all the same length.

Each time bracket of a measured reference power signal has an order in said measured reference power signal, corresponding to its temporal order within the measured reference power signal.

The or each of the at least one measured reference power signal comprises a first time bracket and a last time bracket, the first time bracket being the first of the time brackets in time and the last time bracket being the last of the time brackets in time.

The electronic device 310 here comprises a dividing module 312.

The electronic device 310, more particularly the dividing module 312, is adapted to receive the at least one reference power signal.

The electronic device 310 is adapted to store the at least one reference power signal in a memory 314 of the electronic device.

The dividing module 312 is adapted to divide the or each of the at least one measured reference power signal in consecutive time brackets, as per step 114.

The method here further comprises discretizing the at least one measured reference power signal before the generating of the sample brackets.

The discretizing is, for example, performed directly on each time bracket for the or each of the measured reference power signals, after the dividing step 114.

Alternatively, the discretizing is performed directly on the or each of the measured reference power signals, after the measuring step 112 and before the dividing step 114.

The discretizing is, for example, performed using K-means clustering, in particular for each time bracket for the or each of the measured reference power signals.

The number k of clusters is, for example, determined using the elbow method.

The number k of clusters depend on the granulometry of the measured reference power signal.

Here, each time bracket is, for example, discretized in ten clusters.

The dividing module 312 is, for example, also adapted to perform the discretizing step, as here described.

For at least one time bracket, at least one constraint is defined in step 116.

The at least one constraint corresponds to one or more proprieties that the sample brackets generated for said time bracket in step 118 have to verify.

In case of a plurality of measured reference power signals, the at least one constraint is the same for all the time brackets that have the same order in the respective measured reference power signals.

More particularly, in step 116, at least one constraint is defined for one or some time brackets, but not all the time brackets.

Constraints are, for example, only defined for the first and the last time brackets.

Alternatively, constraints are, for example, only defined for the i-first and the j-last time brackets, with i, j integers, such that the sum of i and j is strictly inferior to the number of time brackets.

For example, each sample bracket generated in step 118, that will be described in more details below, starts at a first position at a start power value and ends at a last position at an end power value.

More particularly, each sample bracket for the first time bracket starts at a first position at a respective minimum start power value, and each sample bracket for the last time bracket ends at a last position at a respective minimum end power value.

The at least one constraint, for example, comprises that, for each sample bracket for the i-first time bracket, here for the first time bracket, said sample bracket has values superior or equal to the minimum start power value, and/or, more particularly and, that, for each sample bracket for the j-last time bracket, here the last time bracket, said sample bracket has values superior or equal to the minimum end power value.

The at least one constraint, for example, comprises that, for each sample bracket for the first time bracket, said sample bracket has values strictly superior to the minimum start power value outside the first position, and/or, more particularly and, that, for each sample bracket for the last time bracket, said sample bracket has values strictly superior to the minimum end power value outside the last position.

Thus, the values generated for the power for each sample bracket corresponding to the first time interval, outside the start of said sample bracket, is superior or equal or strictly superior to the value of the power at the start of said sample bracket; and the values generated for the power for each sample bracket corresponding to the last time interval, outside the end of said sample bracket, is superior or equal or strictly superior to the value of the power at the end of said sample bracket.

The at least one constraint, for example, comprises that the first time bracket has a starting point determined from the at least one reference power signal, more particularly by the results of the K-means clustering algorithm, for example corresponding to the centroid of the minimal cluster.

The at least one constraint, for example, comprises that the last time bracket has an ending point determined from the at least one reference power signal, more particularly by the results of the K-means clustering algorithm, for example corresponding to the cluster centroid closest to the last value of the bracket.

The electronic device 310 here comprises a constraint module 316.

The constraint module is adapted to define at least one constraint, as per step 116.

The electronic device 310 is adapted to store the at least one constraint in the memory 314 of the electronic device.

For each time bracket, i.e for each time interval 212 of a corresponding measured reference power signal, sample brackets 214 are generated from the corresponding time bracket of the corresponding measured reference power signal, by constructing a chain sequence using Monte Carlo Markov Chain, the constructed chain sequence following the at least one constraint of said time bracket if any, each sample bracket corresponding to one constructed chain sequence.

Thus, if no constraint are defined in step 116 for a time bracket, the sample brackets 214 for said time bracket are generated by constructing a chain sequence using Monte Carlo Markov Chain, without any constraint.

If one or more constraints are defined in step 116 for a time bracket, the sample brackets 214 for said time bracket are generated by constructing a chain sequence using a modified Monte Carlo Markov Chain, such that the sequence follows said constraint(s).

The sample brackets are constructed as a Markov chain sequence of draws which has a similar statistical properties as a distribution of interest, corresponding to the time bracket, and taking in consideration the potential constraint(s) of said time bracket.

More particularly, for each sample bracket, i.e. for each time interval 212 of the corresponding measured reference power signal, the chain sequence using Monte Carlo Markov Chain is built using a transition matrix.

The transition matrix is derived from the reference power signal of the corresponding time bracket, here discretized.

A transition matrix is derived for each time bracket.

The transition matrix comprises, for each power at a given instant, the probability of having different states, here corresponding to power values, at the next instant.

The notion of instant is here related to the discretization performed on the measured reference power signal.

Each sample bracket starts at a first position, for example equal to the position of the closest K-means cluster centroid.

The electronic device 310 here comprises a bracket generating module 318.

The bracket generating module 318 is adapted to receive the at least one constraint from the constraint module 316 and the time brackets from the dividing module 312.

The bracket generating module 318 is adapted to perform the generating sample brackets step 118 as per the invention.

More particularly, the bracket generating module 318 is adapted to generate transition matrixes from the time brackets and to generate sample brackets by constructing a chain sequence using Monte Carlo Markov Chain with the corresponding transition matrix, the constructed chain sequence following the at least one constraint of said time bracket if any, each sample bracket corresponding to one constructed chain sequence.

The electronic device 310 is adapted to store the generated sample brackets in the memory 314 of the electronic device.

Sample signals 216 are then generated by concatenating sample brackets 214 of the generated sample brackets, such that, for each sample signal 216, for each time bracket, i.e. for each time interval 212 of the corresponding measured reference power signal, one sample bracket is selected to be concatenated.

The sample brackets are concatenated in the time order of the corresponding time bracket in the measured reference power signal.

Here, the sample brackets of a sample signal are concatenated, such that each sample bracket to be concatenated but the last finishes where the next consecutive sample bracket starts.

More particularly, for each sample signal, each sample bracket but the first is adapted, such that the corresponding curve is translated along the power axis, such that the curve for said sample bracket starts where the curve for the previous sample bracket ends.

For each time interval i but the first, the power value Pss of the sample signal is equal to:

$$[Math\ 1]\ P_{ss}(t \in [t1; t2]) = P_{sb(i)}(t) - P_{sb(i)}(t1) + P_{sb(i-1)}(t1),$$

with [t1; t2] the time interval, $P_{sb(i)}$ the power value of the sample bracket corresponding to interval [t1; t2] and $P_{sb(i-1)}$ the power value of the previous sample bracket.

Thus, in the generated sample signal, for each time interval, the variation of the power value within the time interval is similar to that of the corresponding sample bracket, but the absolute value of the power may be different.

The generated sample signals are thus continuous.

The generated sample signal, for example, has a starting point determined from the at least one reference power signal, more particularly by the results of the K-means clustering algorithm, for example corresponding to the centroid of the cluster closest to the first value of the reference power signal.

The generated sample signal, for example, has an ending point determined from the at least one reference power signal, more particularly by the results of the K-means clustering algorithm, for example corresponding to the cluster centroid closest to the last value of the reference power signal.

The electronic device 310 here comprises a signal generating module 320.

The signal generating module 320 is adapted to receive the generated sample brackets from the bracket generating module 318.

The signal generating module 320 is adapted to perform the generating sample signals step 120 as per the invention.

The electronic device 310 is adapted to store the generated sample signals in the memory 314 of the electronic device.

A confidence interval is then defined from the generated sample signals.

Said defining of the confidence interval, for example, comprises calculating the mean signal and the standard deviation of all the generated sample signals, and defining the confidence interval from the calculated mean signal and standard deviation.

More particularly, the confidence interval is the interval comprised between the calculated mean signal minus X times the calculated standard deviation and the calculated mean signal plus X times the calculated standard deviation, X being a positive number different from 0.

X is, for example, equal to 2.

Thus, the confidence interval C.I. is calculated according to the following equation:

$$[\text{Math 2}]\ C.I. = [M - 2 \times Std; M + 2 \times Std]$$

with M the mean signal and Std the standard deviation.

The electronic device 310 here comprises a confidence interval module 322.

The confidence interval module 322 is adapted to receive the generated sample signals from the signal generating module 320.

The confidence interval module 322 is adapted to perform the confidence interval defining step 122 as per the invention.

The electronic device 310 is adapted to store the confidence interval in the memory 314 of the electronic device.

The method further comprises measuring a power signal 124 of the operated photovoltaic system, for example as described in regard to figure 1.

The measured power signal is acquired for a duration of interest.

The measured power signal is stored.

The duration of interest comprises, more particularly is constituted of, a day.

A day is defined as previously in regard to the duration(s) of the measured reference power signal(s).

Alternatively, the duration of interest, for example, comprises multiple days. The method is, for example, adapted by considering that the measured power signal is equivalent to multiple measured power signals for each day of the multiple days, each measured power signal being compared to determine whether snow covered the photovoltaic system on said day.

The measured power signal 124 is then compared to the confidence interval defined in step 122.

If the measured power signal is within the confidence interval, it is determined that the photovoltaic system was covered with snow during the duration of interest.

If the measured power signal is outside the confidence interval, it is determined that the photovoltaic system was not covered with snow during the duration of interest.

Thus, the method of the invention allows determining whether the photovoltaic system was covered in snow or not, without weather or satellite data for the duration of interest.

Thus, even if weather or satellite data are unavailable or cannot be relied on at a given moment, it is possible to determine the snow coverage, using the confidence interval based on reference signals, for which it was determined that snow covered the reference system.

In an embodiment, the method further comprises sending a snow alert signal 130 if it is determined that the photovoltaic system was covered with snow during the duration of interest.

The snow alert signal is, for example, a visual signal (for example, light and/or text and/or symbol) and/or a sound signal.

In an embodiment, the method further comprises detecting a time interval where the power signal is inferior to a threshold, the time interval being during the duration of interest, and sending an inverter downtime alert signal 132 if it is determined that the photovoltaic system was not covered with snow during the duration of interest.

The inverter downtime alert signal is, for example, a visual signal (for example, light and/or text and/or symbol) and/or a sound signal.

The inverter downtime alert signal allows taking the corresponding operation and maintenance actions, as soon as the alert is received.

**EP 4 765 627 A1**

The threshold, for example, corresponds to a threshold typically used to detect an inverter downtime.

The method of the invention thus allows distinguishing whether the power value is low from a possible inverter downtime or from snow coverage.

The invention further relates to an electronic device, as described in regard to figure 4.

The electronic device comprises an information processing unit comprising for example the memory 314 and a processor associated with the memory.

The dividing module 312, the constraint module 316, the bracket generating module 318, the signal generating module 320 and the confidence interval module 322 are each implemented in the form of software, or a software brick, executable by the processor. The memory is then able to store a dividing software, a constraint software, a bracket generating software, a signal generating software and a confidence interval software. The processor is then able to execute each of the softwares.

In a variant not shown, the dividing module 312, the constraint module 316, the bracket generating module 318, the signal generating module 320 and the confidence interval module 322 are each made in the form of a programmable logic component, such as an FPGA (Field Programmable Gate Array), or an integrated circuit, such as an ASIC (Application Specific Integrated Circuit).

When the electronic device is implemented in the form of one or more software programs, i.e. in the form of a computer program, also known as a computer program product, it is also capable of being recorded on a computer-readable medium, not shown. The computer-readable medium is, for example, a medium capable of storing electronic instructions and of being coupled to a bus of a computer system. By way of example, the readable medium is an optical disc, a magneto-optical disc, a ROM memory, a RAM memory, any type of non-volatile memory (for example FLASH or NVRAM) or a magnetic card. A computer program containing software instructions is stored on the readable medium.

The invention further relates to an assembly comprising a photovoltaic system and an electronic device, as described previously, and a calculator.

The calculator is adapted to compare the measured power signal to a confidence interval defined by the electronic device and to determine that the photovoltaic system was covered with snow during the duration of interest if the measured power signal is within the confidence interval, and that the photovoltaic system was not covered with snow during the duration of interest if the measured power signal is outside the confidence interval.

The invention further relates to a computer program product, preferably a non-transitory computer program product, directly loadable into the internal memory of a digital computer or stored on a computer usable medium, the computer program product comprising instructions that, when executed, implement the steps of dividing in consecutive time brackets, defining the at least one constraint, the generating of the sample brackets, generating the sample signals, and defining the confidence interval of the method of the invention.

## Claims

1. Method (110) of operating a photovoltaic system (10, 12, 14) comprising at least one sensor (16) adapted to measure a power signal of the photovoltaic system, the method (110) comprising the following steps:

   - measuring (112) at least one reference power signal (210) of at least one reference photovoltaic system, the or each reference photovoltaic system comprising at least one reference sensor for measuring the power signal of said reference photovoltaic system, each measured reference power signal (210) being acquired for a respective duration, the reference photovoltaic system being covered in snow during the duration,
   - dividing (114) the or each of the at least one measured reference power signal (210) in consecutive time brackets,
   - defining (116) at least one constraint for at least one time bracket,
   - for each time bracket, generating (118) sample brackets (214) from the corresponding time bracket of the corresponding measured reference power signal (210), by constructing a chain sequence using Monte Carlo Markov Chain, wherein the constructed chain sequence follows the at least one constraint of said time bracket if any, each sample bracket corresponding to one chain sequence,
   - generating (120) sample signals (216) by concatenating sample brackets, such that, for each sample signal (216), for each time bracket, one sample bracket (214) is selected to be concatenated, the sample brackets (214) being concatenated in the time order of the corresponding time bracket in the measured reference power signal (210),
   - defining a confidence interval (122) from the generated sample signals,
   - measuring a power signal (124) of the operated photovoltaic system (10, 12, 14), the measured power signal (210) being acquired for a duration of interest,
   - comparing (216) the measured power signal to the confidence interval,

8

- determining (218) that the photovoltaic system (10, 12, 14) was covered with snow during the duration of interest if the measured power signal is within the confidence interval, and that the photovoltaic system (10, 12, 14) was not covered with snow during the duration of interest if the measured power signal is outside the confidence interval.

2. Method of operating a photovoltaic system according to claim 1, wherein, during the generating (120) of the sample signals (216), the sample brackets (214) of each sample signal (216) are concatenated such that each sample bracket (214) to be concatenated but the last finishes where the next consecutive sample bracket (214) starts.

3. Method of operating a photovoltaic system according to claim 1 or 2, comprising sending a snow alert signal (130) if it is determined that the photovoltaic system (10, 12, 14) was covered with snow during the duration of interest.

4. Method of operating a photovoltaic system according to any one of claims 1 to 3, comprising detecting a time interval where the power signal is inferior to a threshold, the time interval being during the duration of interest, the method comprising sending an inverter downtime alert signal (132) if it is determined that the photovoltaic system (10, 12, 14) was not covered with snow during the duration of interest.

5. Method of operating a photovoltaic system according to any one of claims 1 to 4, wherein the duration of interest and the duration(s) of the measured reference power signal (210) comprises, more particularly is constituted of, a day.

6. Method of operating a photovoltaic system according to any one of claims 1 to 5, wherein the or each of the at least one measured reference power signal (210) comprises a first time bracket and a last time bracket, the first time bracket being the first of the time brackets in time and the last time bracket being the last of the time brackets in time,

   each sample bracket (214) for the first time bracket starts at a first position at a minimum start power value, and each sample bracket (214) for the last time bracket ends at a last position at a minimum end power value, the at least one constraint comprising that, for each sample bracket (214) for the first time bracket, said sample bracket (214) only has values superior to the minimum start power value outside the first position, and/or that, for each sample bracket (214) for the last time bracket, said sample bracket (214) only has values superior to the minimum end power value outside the last position.

7. Method of operating a photovoltaic system according to claim 6, wherein the or each of the at least one measured reference power signal (210) is divided into at least four brackets, constraints being defined only for the first and the last time bracket.

8. Method of operating a photovoltaic system according to any one of claims 1 to 7, comprising discretizing the at least one measured reference power signal (210) before the generating (118) of the sample brackets (214), the chain sequence using Monte Carlo Markov Chain being built for each sample bracket (214) using a transition matrix, the transition matrix being derived from the reference power signal (210) of the corresponding time bracket.

9. Method of operating a photovoltaic system according to any one of claims 1 to 8, wherein the defining (122) of the confidence interval comprises calculating the mean signal and the standard deviation of all the generated sample signals, and defining the confidence interval from the calculated mean signal and standard deviation.

10. Method of operating a photovoltaic system according to claim 9, wherein the confidence interval is the interval comprised between the calculated mean signal minus two times the calculated standard deviation and the calculated mean signal plus two times the calculated standard deviation.

11. Method of operating a photovoltaic system according to any one of claims 1 to 10, wherein the at least one reference photovoltaic system is the operated photovoltaic system (10, 12, 14).

12. Electronic device (310) adapted to receive at least one reference power signal (210) of at least one reference photovoltaic system, the or each reference photovoltaic system comprising at least one reference sensor for measuring the power signal of said reference photovoltaic system, the measured reference power signal (210) being acquired for a duration, the reference photovoltaic system being covered in snow during the duration, the electronic device (310) being adapted to implement the steps of dividing in consecutive time brackets, defining the at least one constraint, the generating of the sample brackets, generating the sample signals, and defining the confidence interval of the method of any one of claims 1 to 11.

13. Assembly comprising a photovoltaic system (10, 12, 14), an electronic device (310) according to claim 12, and one calculator, the photovoltaic system (10, 12, 14) comprising at least one sensor adapted to measure a power signal of the photovoltaic system, the calculator being adapted to compare the measured power signal to a confidence interval defined by the electronic device (310) and to determine that the photovoltaic system (10, 12, 14) was covered with snow during the duration of interest if the measured power signal is within the confidence interval, and that the photovoltaic system (10, 12, 14) was not covered with snow during the duration of interest if the measured power signal is outside the confidence interval.

14. Computer program product directly loadable into the internal memory of a digital computer or stored on a computer usable medium, the computer program product comprising instructions that, when executed, implement the steps of dividing in consecutive time brackets, defining the at least one constraint, the generating of the sample brackets, generating the sample signals, and defining the confidence interval of the method of any one of claims 1 to 11.

FIG.1

110

-112-

-114-          -116-

-118-

-120-

-124-          -122-

-126-

-128-

-130-          -132-

## FIG.2

214

210

216

212

<u>FIG.3</u>

310

| -312- | -314- | -316- |

-318-

-320- | -322-

<u>FIG.4</u>

| | Europäisches Patentamt European Patent Office Office européen des brevets | **EUROPEAN SEARCH REPORT** | **Application Number** EP 24 30 7285 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/030866 A1 (BHASIN SANJAY [IN] ET AL) 25 January 2024 (2024-01-25) | 12-14 | INV. H02S50/00 |
| A | * paragraphs [0002], [0003], [0042] – [0090]; claims 1-8; figures 1-4,7 * | 1-11 | |
| | ----- | | |
| A | ANDREY PEPELYSHEV ET AL: "Panel-based stratified cluster sampling and analysis for photovoltaic outdoor measurements", APPLIED STOCHASTIC MODELS IN BUSINESS AND INDUSTRY, WILEY, GB, vol. 33, no. 1, 28 November 2016 (2016-11-28), pages 35-53, XP072769796, ISSN: 1524-1904, DOI: 10.1002/ASMB.2217 * pages 35-53 * | 1-14 | |
| | ----- | | |

|  |  |
|---|---|
| | TECHNICAL FIELDS SEARCHED (IPC) |
| | H02S |

The present search report has been drawn up for all claims

| Place of search | Date of completion of the search | Examiner |
|---|---|---|
| The Hague | 23 May 2025 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 30 7285

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| US 2024030866 A1 | 25-01-2024 | BR 112023003671 A2 | 04-04-2023 |
| | | CA 3192998 A1 | 03-03-2022 |
| | | EP 4205276 A1 | 05-07-2023 |
| | | US 2024030866 A1 | 25-01-2024 |
| | | WO 2022043872 A1 | 03-03-2022 |

EPO FORM P0459

For more details about this annex : see Official Journal of the European Patent Office, No. 12/82